# EUROPÄISCHE PATENTSCHRIFT

(11) **EP 1 030 980 B1**
(45) Veröffentlichungstag und Bekanntmachung des Hinweises auf die Patenterteilung: **13.03.2002**
(21) Anmeldenummer: 98946233.8
(22) Anmeldetag: 11.07.1998
(51) Int. Cl.: F16D 65/16

(54) **ELEKTROMECHANISCHE BREMSE FÜR KRAFTFAHRZEUGE**
ELECTRO-MECHANICAL BRAKE SYSTEM FOR A VEHICLE
FREIN A COMMANDE ELECTROMECANIQUE POUR AUTOMOBILE

(30) Priorität: 13.11.1997 DE 19750273
(43) Veröffentlichungstag der Anmeldung: 30.08.2000
(73) Patentinhaber: ROBERT BOSCH GMBH, 70442 Stuttgart (DE)
(72) Erfinder: SCHAFFER, Wolfram, D-71282 Hemmingen (DE)
(86) Internationale Anmeldenummer: DE9801935
(87) Internationale Veröffentlichungsnummer: WO9925986

(56) Entgegenhaltungen:
- EP-A- 0 275 783
- US-A- 4 804 073
- DATABASE WPI Section PQ, Week 9602 Derwent Publications Ltd., London, GB; Class Q18, AN 96-016605 XP002089653 & JP 07 291120 A (AKEBONO BRAKE KOGYO CHUO GIJUTSU KK), 7. November 1995
- PATENT ABSTRACTS OF JAPAN vol. 096, no. 007, 31. Juli 1996 & JP 08 072702 A (AKEBONO BRAKE RES &DEV CENTER LTD), 19. März 1996

## Beschreibung

### Stand der Technik

Die Erfindung geht aus von einer elektromechanischen Bremse nach der Gattung des Patentanspruchs 1.

Es ist eine Bremse bekannt (WO 96/03301), bei der ein elektrischer Antriebsmotor mit einem Rollengewindetrieb zusammenwirkt, dessen Spindel in Abhängigkeit von der Bestromung des Motors Bremsbeläge in einem Zustellhub gegen eine Bremsscheibe preßt oder in einem Rückstellhub von dieser abhebt. Dabei wird die Position der Spindel von einem Sensor überwacht, um den Rückstellhub bei einer definierten Spindelstellung zu begrenzen. Dennoch ist es bei der bekannten Bremse nicht ausgeschlossen, daß bei einem Ausfall des Sensors, Störungen in der Steuerelektronik der Bremse oder auch bei einem fehlerhaften elektrischen Anschluß des Antriebsmotors beim Rückstellen der Spindel der zulässige Rückstellhub überschritten und durch Auftreffen der Spindel auf ein Hindernis beispielsweise der Rollengewindetrieb blockiert oder zerstört oder der Motor überlastet wird.

Bei einer aus US-A-4 804 073 bekannten gattungsgemäßen elektromechanischen Bremse ist dagegen eine Schaltkupplung vorgesehen, welche in einer ersten Schaltposition in einem Zustellhub der Bremse die Drehbewegung eines Antriebsmotors auf einen Spindeltrieb überträgt, mit dem Bremsbeläge gegen ein Reibelement preßbar sind. Bei Erreichen und Überschreiten eines zulässigen Rückstellhubs der Bremse trennt die Schaltkupplung in einer zweiten Schaltposition den Antriebsmotor vom Spindeltrieb. Eine Beschädigung der Bremse ist damit weitgehend unterbunden. Die Schaltkupplung der bekannten Bremse ist konstruktiv zwar sehr einfach gestaltet, da aber die Arbeitsweise der Schaltkupplung auf der Reibschlußwirkung beruht, kann ihr Schaltverhalten Schwankungen unterliegen, beispielsweise durch Verschleiß oder Eindringen von Fremdstoffen.

### Vorteile der Erfindung

Die erfindungsgemäße Bremse mit den Merkmalen des Patentanspruchs 1 hat demgegenüber den Vorteil, daß sie sich durch eine robuste, mechanisch funktionssicher von der Spindel zu schaltende Kupplung auszeichnet. Sobald die wirkungsmäßige Trennung der Spindel von dem elektrischen Antriebsmotor erfolgt, kann sich die Spindel frei drehen, so daß ein wesentlich weiterer Weg der Spindel über den Rückstellhub hinaus vermieden wird.

Durch die in den Unteransprüchen aufgeführten Maßnahmen sind vorteilhafte Weiterbildungen und Verbesserungen der im Patentanspruch 1 angegebenen Bremse möglich.

### Zeichnungen

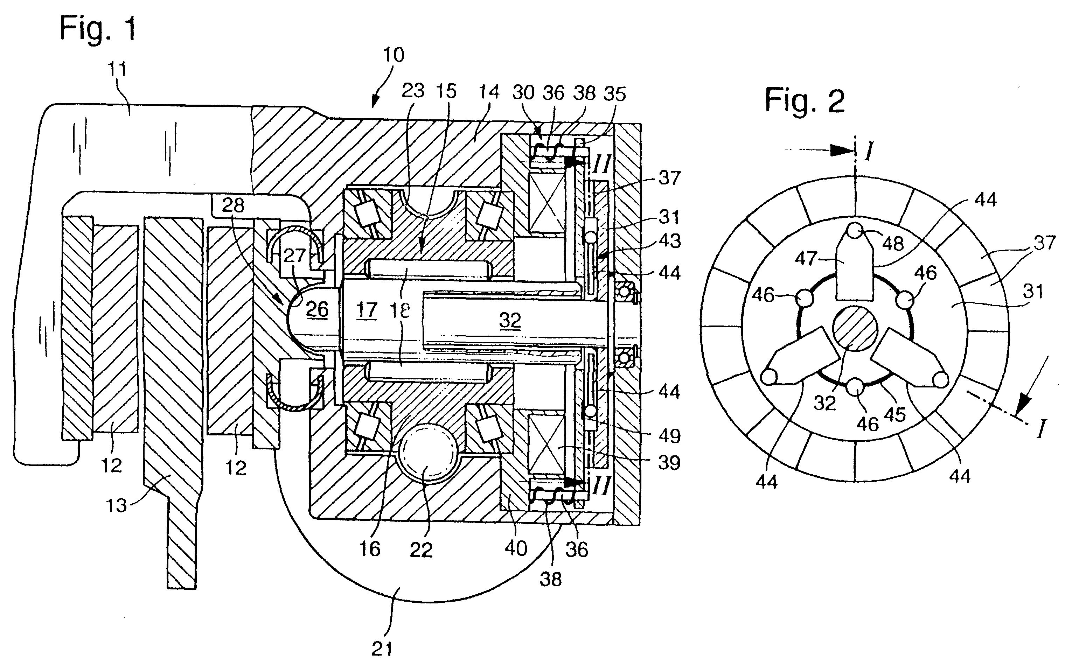

Drei Ausführungsbeispiele der Erfindung sind in den Zeichnungen vereinfacht dargestellt und in der nachfolgenden Beschreibung näher erläutert. Es zeigen Figur 1 eine elektromechanische Bremse im Längsschnitt mit einer ersten Ausführungsform einer Schaltkupplung, letztere gemäß Schnittverlauf I-I in Figur 2, Figur 2 eine Ansicht der ersten Ausführungsform der Schaltkupplung gemäß Schnittverlauf II-II in Figur 1, Figuren 3 und 4 zwei weitere Ausführungsformen von Schaltkupplungen im Schnitt.

### Beschreibung der Ausführungsbeispiele

Eine in Figur 1 dargestellte elektromechanische Bremse 10 ist als Scheibenbremse ausgebildet. Sie weist einen Schwimmsattel 11 auf, in dem ein Paar Reibbremsbeläge 12 beiderseits einer als rotierendes Reibelement wirkenden Bremsscheibe 13 angebracht sind. Zum Anpressen der Bremsbeläge 12 gegen die Bremsscheibe 13 ist in einem mit dem Schwimmsattel 11 vereinigten Gehäuse 14 ein selbsthemmungsfreier Spindeltrieb 15 in der Form eines Rollengewindetriebs angeordnet. Dieser weist eine im Gehäuse 14 drehbar gelagerte Spindelmutter 16, eine diese koaxial durchgreifende Gewindespindel 17 sowie eine Anzahl zwischen der Spindelmutter und der Gewindespindel angeordnete Gewinderollen 18 auf. Die Gewinderollen 18 stehen mit einem Muttergewinde der Spindelmutter 16 und mit einem Spindelgewinde der Gewindespindel 17 in Eingriff. Durch rotierenden Antrieb der Spindelmutter 16 werden die Gewinderollen 18 zu einer umlaufenden Bewegung um die Gewindespindel 17 herum wie Planetenräder eines Planetengetriebes angetrieben. Während ihrer Umlaufbewegung rollen die Gewinderollen 18 im Muttergewinde und auf dem Spindelgewinde ab, das heißt sie führen während der Umlaufbewegung um die Gewindespindel 17 herum eine Rotationsbewegung um ihre eigene Achse aus. Die Rotationsbewegung der Gewinderollen 18 bewirkt eine translatorische Bewegung der Gewindespindel 17 in axialer Richtung.

Zum rotierenden Antrieb der Spindelmutter 16 weist die elektromechanische Bremse 10 einen elektrischen Antriebsmotor 21 mit einer Schnecke 22 auf, welche mit einer umlaufenden Verzahnung 23 der Spindelmutter 16 kämmt. Die Gewindespindel 17 ist in der einen Drehrichtung des Elektromotors 21 in einem Zustellhub zum Anpressen der Bremsbeläge 12 gegen die Bremsscheibe 13 längsbewegbar, in der anderen Drehrichtung des Motors ist sie in einem Rückstellhub zum Lösen der Bremsbeläge 12 von der Bremsscheibe 13 rückstellbar. Die Gewindespindel 17 bildet somit ein elektromotorisch bidirektional längsbewegbares Betätigungsglied der elektromechanischen Bremse 10.

Für den reibungsarmen Angriff am antriebsseitigen Bremsbelag 12 ist die Gewindespindel 17 an ihrem einen Ende mit einer halbkreisförmigen Kalotte 26 versehen, während der zugeordnete Bremsbelag 12 eine Halbkugelpfanne 27 trägt. Die Kalotte 26 bildet einen Lagerkopf, die Halbkugelpfanne 27 eine Lagerpfanne für eine Drehlagerung 28. Diese wird lediglich bei Auftreten eines später beschriebenen Fehlerfalls benötigt.

Aufgrund der selbsthemmungsfreien Ausbildung des Spindeltriebs 15 bewirkt ein Druck auf die Gewindespindel 17 in axialer Richtung deren Rotation mit der Folge einer translatorischen Bewegung in axialer Richtung. Um die Gewindespindel 17 gegen Drehen bei ordnungsgemäßer Funktion der elektromechanischen Bremse 10 zu sichern, ist eine Schaltkupplung 30 als Drehsicherungseinrichtung im schwimmsattelabgewandten Teil des Gehäuses 14 angeordnet. Die Schaltkupplung 30 ist als formschlüssige Scheibenkupplung mit einer ersten Kupplungsscheibe 31 ausgebildet, welche drehfest mit einem im Gehäuse 14 drehbar gelagerten Wellenstumpf 32 verbunden ist. Auf dem gleichachsig zur Gewindespindel 17 verlaufenden Wellenstumpf 32 ist die Gewindespindel axial verschiebbar geführt. Eine nicht dargestellte Formschlußverbindung zwischen Wellenstumpf 32 und Gewindespindel 17 verhindert eine Relativverdrehung zwischen diesen beiden Bauteilen.

Die Schaltkupplung 30 weist eine zweite Kupplungsscheibe 35 auf, welche im Gehäuse 14 auf Zapfen 36 unverdrehbar aber axial verschiebbar geführt ist. Wie gezeichnet, stehen die beiden Kupplungsscheiben 31 und 35, welche an ihren einander zugewandten Stirnseiten mit einer komplementär ausgebildeten Verzahnung 37 oder mit Klauen versehen sind, aufgrund der Wirkung von auf den Zapfen 36 geführten Anpreßfedern 38 miteinander in Eingriff. Im eingerückten Zustand der Schaltkupplung 30 ist demzufolge die erste Kupplungsscheibe 31 unverdrehbar gehalten. Die Schaltkupplung 30 ist elektromagnetisch trennbar. Hierzu ist die als Ankerscheibe dienende zweite Kupplungsscheibe 35 bei Bestromung einer Wicklung 39 in einer gehäusefesten Wicklungsträgerplatte 40 von der ersten Kupplungsscheibe 31 abhebbar.

Bei ordnungsgemäß funktionierender elektromechanischer Bremse 10 ist ein Trennen der Schaltkupplung 30 nicht erforderlich, da die Gewindespindel 17 beim Spannen und Lösen der Bremse lediglich eine elektromotorisch erzeugte Längsbewegung ausführen soll. Dabei wird von einem nicht dargestellten Sensor der Rückstellhub der Gewindespindel 17 überwacht, um das vollständige Lösen der Bremsbeläge 12 von der Bremsscheibe 13 sicherzustellen und ein Lüftspiel einzustellen. Fällt jedoch bei einer Bremsung der elektrische Antriebsmotor 21 aus, so wird durch elektromagnetisches Trennen der Schaltkupplung 30 eine selbsttätige Rückstellung der Bremse 10 bewirkt. Und zwar dadurch, daß aufgrund von auf die Gewindespindel 17 axial wirkenden Kräften, welche überwiegend von der elastischen Verformung des Schwimmsattels 11 und der Bremsbeläge 12 herrühren, die Gewindespindel in Rotation versetzt wird. Da bei stehender Spindelmutter 16 (das Schneckengetriebe 16, 22 ist selbsthemmend) die Rotation der Gewindespindel 17 auch deren Längsverschiebung zur Folge hat, wird ein ausreichendes Lösen der Bremse 10 erzielt.

Die elektromechanische Bremse 10 ist außerdem mit einer mechanisch wirkenden Ausrückeinrichtung 43 für die Schaltkupplung 30 ausgestattet. Die Ausrückeinrichtung 43 besteht bei der ersten Ausführungsform der Schaltkupplung 30 aus drei wippenförmigen, zwischen den beiden Kupplungsscheiben 31 und 35 angeordneten Ausrückhebeln 44. Wie aus Figur 2 zu ersehen ist, sind die Ausrückhebel 44 radial verlaufend in gleichmäßiger Teilung an der ersten Kupplungsscheibe 31 angeordnet, und zwar mittels eines Halteringes 45, welcher die Ausrückhebel 44 übergreift und mit Zapfen 46 an der Kupplungsscheibe 31 befestigt ist. Die Ausrückhebel 44 sind mit ihrem radial inneren Arm 47 für den Angriff des von der Kalotte 26 abgewandten Stirnendes der Gewindespindel 17 und mit ihrem radial äußeren Arm 48 für den Angriff an der zweiten Kupplungsscheibe 35 ausgebildet. Im Bereich des Ausrückhebelangriffs ist die Kupplungsscheibe 35 mit einem eingelassenen Gleitring 49 für eine Minimierung der Reibung zwischen den Ausrückhebeln 44 und der Kupplungsscheibe versehen.

Während im vorbeschriebenen Fehlerfall einer Motorstörung aufgrund der Reibung in der Drehlagerung 28 und im Spindeltrieb 15 ein Überschreiten des zulässigen Rückstellhubs der Gewindespindel 17 weitgehend ausgeschlossen ist, kann es bei selten auftretenden Fehlern in Verbindung mit einer geschlossenen Schaltkupplung 30 jedoch zu einem Überschreiten des Rückstellhubs kommen. Beispielsweise kann der den elektromotorisch erzeugten Rückstellhub der Gewindespindel 17 überwachende Sensor ausfallen oder ein Software-Fehler in der Steuerelektronik der elektromechanischen Bremse 10 ein Überschreiten des zulässigen Rückstellhubs verursachen oder bei einer nicht autorisierten Reparatur der Bremse ein Verpolen des elektrischen Antriebsmotors 21 vorgenommen werden mit der Folge, daß bei der Bremsbetätigung statt einer Zuspannbewegung der Gewindespindel 17 diese elektromotorisch in die entgegengesetzte Richtung bewegt wird. Sofern einer dieser Fehlerfälle auftritt, trifft die vom Elektromotor 21 translatorisch angetriebene Gewindespindel 17 bei Überschreiten des zulässigen Rückstellhubs mit ihrem kalottenabgewandten Stirnende auf den inneren Arm 47 der Ausrückhebel 44 und zwingt diesen eine Schwenkbewegung auf, welche das Abheben der zweiten Kupplungsscheibe 35 entgegen der Kraft der Anpreßfedern 38 von der ersten Kupplungsscheibe 31 bewirkt. Die Schaltkupplung 30 ist dadurch getrennt. Aufgrund der freigegebenen ersten Kupplungsscheibe 31 vermag sich nun die Gewindespindel 17 in Rotation zu versetzen, welche bei Angleichung der Drehzahl von Spindelmutter 16 und Gewindespindel 17 zu einem raschen axialen Stillstand der letzteren führt. Hiermit ist verhindert, daß die Gewindespindel 17 auf Anschlag fährt, der Spindeltrieb 15 blockiert oder zerstört oder die Schaltkupplung 30 und das Gehäuse 14 beschädigt werden. Die mechanische Funktionsfähigkeit der Bremse 10 bleibt daher erhalten.

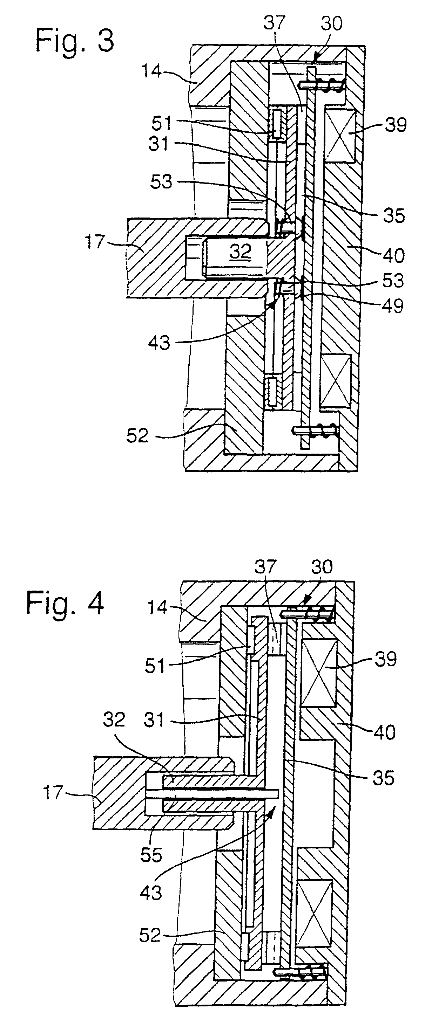

Abweichend vom Ausführungsbeispiel gemäß den Figuren 1 und 2 können Ausführungsformen der Schaltkupplung 30 nach den Figuren 3 und 4 gestaltet sein, wenn die beiden Kupplungsscheiben 31 und 35 platzvertauscht sind, weil die Wicklungsträgerplatte 40 den schwimmsattelabgewandten Abschluß des Gehäuses 14 bildet. Die erste Kupplungsscheibe 31 ist dann axial unverschiebbar mittels eines Wälzlagers 51 an einer Lagerplatte 52 abgestützt, welche an die Stelle der Wicklungsträgerplatte im Ausführungsbeispiel nach Figur 1 getreten ist. Die erste Kupplungsscheibe 31 ist, wie bei der Ausführungsform nach Figur 1, mit einem gleichachsigen, in die Gewindespindel 17 eingreifenden Wellenstumpf 32 versehen. Zwischen dem Wellenstumpf 32 und der Gewindespindel 17 ist auch hier eine Formschlußverbindung gegeben, welche eine relative Verdrehung der beiden Bauteile ausschließt, jedoch eine axiale Verschiebung der Gewindespindel zuläßt. Die erste Kupplungsscheibe 31 ist ferner wellenstumpfnah von mehreren Ausrückstößeln 53 einer Ausrückeinrichtung 43 durchgriffen, denen ein Gleitring 49 an der zweiten Kupplungsscheibe 35 zugeordnet ist. Bei einer Längsverschiebung der Gewindespindel 17 über den zulässigen Rückstellhub hinaus, greift die Gewindespindel mit ihrem Stirnende an den Ausrückstößeln 53 an, so daß diese axial verschoben werden und die zweite Kupplungsscheibe 35 von der ersten Kupplungsscheibe 31 abheben. Die hierdurch erfolgte Trennung der Schaltkupplung 30 erlaubt jetzt eine hubbegrenzende Rotation der Gewindespindel 17.

Bei der Ausführungsform der Schaltkupplung 30 nach Figur 4 ist im Unterschied zu der Ausführungsform nach Figur 3 der Wellenstumpf 32 und die erste Kupplungsscheibe 31 längsdurchbohrt sowie mit einem diese Bohrung durchgreifenden Ausrückstößel 55 einer Ausrückeinrichtung 43 versehen. Bei einem Rückstellüberhub der Gewindespindel 17 verschiebt diese den Ausrückstößel 55 gegen die zweite Kupplungsscheibe 35 und trennt auf diese Weise die Schaltkupplung 30.

## Patentansprüche

1. Elektromechanische Bremse (10) für Kraftfahrzeuge mit einem elektromotorisch bidirektional längsbewegbaren Glied (17) zum Anpressen wenigstens eines Bremsbelages (12) gegen ein Reibelement (13) in einem Zustellhub und zum Lösen des Bremsbelags (12) in einem Rückstellhub sowie mit einer vom längsbewegbaren Glied (17) betätigbaren Schaltkupplung (30), welche bei Überschreiten eines zulässigen Rückstellhubs das längsbewegbare Glied (17) wirkungsmäßig vom elektrischen Antriebsmotor (21) trennt, **gekennzeichnet durch** die Merkmale:
- die Schaltkupplung (30) ist eine formschlüssige Scheibenkupplung mit zwei zusammenwirkenden Kupplungsscheiben (31, 35), von denen die erste Kupplungsscheibe (31) drehbar und axial unverschiebbar in einem Gehäuse (14) der Bremse (10) gelagert ist, während die zweite Kupplungsscheibe (35) drehfest und axial verschiebbar in dem Gehäuse (14) angeordnet ist,
- das längsbewegbare Glied ist als Spindel (17) eines selbsthemmungsfreien Spindeltriebs (15) ausgebildet und drehfest sowie axial verschiebbar mit der ersten Kupplungsscheibe (31) verbunden,
- es ist eine Ausrückeinrichtung (43) vorgesehen, an welcher die Spindel (17) angreift und die zweite Kupplungsscheibe (35) von der ersten Kupplungsscheibe (31) gegen Federkraft trennt.

2. Bremse nach Anspruch 1, **gekennzeichnet durch** die Merkmale:
- die Schaltkupplung (30) befindet sich am bremsbelagabgewandten Ende der Spindel (17),
- bei bremsbelagabgewandt angeordneter erster Kupplungsscheibe (31) und bremsbelagseitig angeordneter zweiter Kupplungsscheibe (35) ist an der ersten Kupplungsscheibe (31) wenigstens ein wippenförmiger Ausrückhebel (44) gelagert, dessen einer Arm (47) für den Angriff der Spindel (17) und dessen anderer Arm (48) für den Angriff an der zweiten Kupplungsscheibe (35) ausgebildet ist.

3. Bremse nach Anspruch 1, **gekennzeichnet durch** die Merkmale:
- die Schaltkupplung (30) befindet sich am bremsbelagabgewandten Ende der Spindel (17),
- bei bremsbelagseitig angeordneter erster Kupplungsscheibe (31) und bremsbelagabgewandt angeordneter zweiter Kupplungsscheibe (35) ist wenigstens ein die erste Kupplungsscheibe (31) durchgreifender Ausrückstößel (43, 55) vorgesehen, dessen eines Ende für den Angriff der Spindel (17) und dessen anderes Ende für den Angriff an der zweiten Kupplungsscheibe (35) ausgebildet ist.

4. Bremse nach Anspruch 3, **dadurch gekennzeichnet, daß** der Ausrückstößel (55) längsverschiebbar in einem Wellenstumpf (32) der ersten Kupplungsscheibe (31) gelagert ist, mit dem die Spindel (17) in drehfestem und axial verschiebbarem Eingriff steht.

## Claims

1. Electro-mechanical brake (10) for motor vehicles, with a member (17), capable of being electro-motively longitudinally moved bi-directionally, for pressing at least one brake lining (12) against a friction element (13) in an application stroke and for releasing the brake lining (12) in a return stroke, and also with a shift clutch (30) which is capable of being actuated by the longitudinally moveable member (17) and which, when a permissible return stroke is exceeded, separates the longitudinally moveable member (17) operatively from the electric drive motor (21), **characterized by** the features:
- the shift clutch (30) is a positive disc clutch with two co-operating clutch discs (31, 35), of which the first clutch disc (31) is mounted rotatably and axially non-displaceably in a housing (14) of the brake (10), whilst the second clutch disc (35) if arranged fixedly in terms of rotation and axially displaceably in the housing (14),
- the longitudinally moveable member is designed as a spindle (17) of a spindle drive (15) free of self-locking and is connected fixedly in terms of rotation and axially displaceably to the first clutch disc (31),
- a disengaging device (43) is provided, on which the spindle (17) engages and separates the second clutch disc (35) from the first clutch disc (31) counter to spring force.

2. Brake according to Claim 1, **characterized by** the features:
- the shift clutch (30) is located at that end of the spindle (17) which faces away from the brake lining,
- with the first clutch disc (31) arranged so as to face away from the brake lining and with the second clutch disc (35) arranged on the brake-lining side, the first clutch disc (1) has mounted on it at least one rocker-like disengaging lever (44), of which one arm (47) is designed for the engagement of the spindle (17) and the other arm (48) is designed for engagement on the second clutch disc (35).

3. Brake according to Claim 1, **characterized by** the features:
- the shift clutch (30) is located at that end of the spindle (17) which faces away from the brake lining,
- with the first clutch disc (31) arranged on the brake-lining side and with the second clutch disc (35) arranged so as to face away from the brake lining, there is provided at least one disengaging tappet (43, 55) which passes through the first clutch disc (31) and of which one end is designed for the engagement of the spindle (17) and the other end is designed for engagement on the second clutch disc (35).

4. Brake according to Claim 3, **characterized in that** the disengaging tappet (55) is mounted longitudinally displaceably in a shaft stub (32) of the first clutch disc (31), the spindle (17) being in rotationally fixed and axially displaceable engagement with said shaft stub.

## Revendications

1. Frein (10) à commande électromagnétique pour des véhicules automobiles, comportant un organe (17) mobile longitudinalement dans les deux directions, entraîné par un moteur électrique pour presser au moins une garniture de frein (12) contre un élément de friction (13) dans une course de rapprochement et pour libérer la garniture de frein (12) dans une course de rappel, ainsi qu'au moins un embrayage de commutation (30) actionné par un organe (17) mobile longitudinalement et qui, en cas de dépassement d'une course de rappel autorisée, coupe l'organe mobile longitudinalement (17), de sa coopération avec le moteur électrique (21),
**caractérisé en ce que**
- l'embrayage de commutation (30) est un embrayage à disque à liaison de forme avec deux disques d'embrayage (31, 32) qui coopèrent dont le premier disque d'embrayage (31) est monté à rotation et de manière solidaire axialement dans le boîtier (14) du frein (10) alors que le second disque d'embrayage (35) est solidaire en rotation mais coulissant axialement dans le boîtier (14),
- l'organe mobile longitudinalement est en forme de broche (17) d'un entraînement à broche (15) non autobloquant et coulissant axialement tout en étant solidaire en rotation, avec le premier disque d'embrayage (31),
- et une installation de débrayage (43) est prévue, soumise à l'action de la broche (17), qui sépare le second disque d'embrayage (35) du premier disque d'embrayage (31) contre la force développée par un ressort.

2. Frein selon la revendication 1,
**caractérisé en ce que**
- l'embrayage de commutation (30) se trouve à l'extrémité de la broche (17), à l'opposé de la garniture de frein,
- pour le premier disque d'embrayage (31) prévu à l'opposé de la garniture de frein et le second disque d'embrayage (35) prévu du côté de la garniture de frein, le premier disque d'embrayage (31) porte au moins un levier de débrayage (44) dont le premier bras (47) attaque la broche (17) et le second bras (48) attaque le second disque d'embrayage (35).

3. Frein selon la revendication 1,
**caractérisé en ce que**
- l'embrayage de commutation (30) est prévu à l'extrémité de la broche (17), à l'opposé de la garniture de frein,
- pour le premier disque d'embrayage (31) du côté de la garniture de frein et le second disque d'embrayage (35) du côté opposé à la garniture de frein, il y a au moins un poussoir de débrayage (43, 45) qui traverse le premier disque d'embrayage (31) et dont une extrémité est réalisée pour attaquer la broche (17) et l'autre extrémité pour attaquer le second disque d'embrayage (35).

4. Frein selon la revendication 3,
**caractérisé en ce que**
le poussoir de débrayage (55) est monté coulissant longitudinalement dans un élément d'axe (32) du premier disque d'embrayage (31) par lequel la broche (17) est en prise solidairement en rotation et de manière à coulisser axialement.
